# EUROPÄISCHE PATENTSCHRIFT

(11) **EP 0 402 833 B1**
(45) Veröffentlichungstag und Bekanntmachung des Hinweises auf die Patenterteilung: **20.04.1994**
(21) Anmeldenummer: 90111011.4
(22) Anmeldetag: 11.06.1990
(51) Int. Cl.: H02J 9/06, H02J 1/10, G06F 1/30

(54) **Schaltung zum Überwachen der Spannung einer ausgewählten Gleichstromversorgungseinrichtung in einem redundanten Stromversorgungssystem**
Circuit for monitoring the voltage of a selected DC power supply device in a redundant power supply system
Circuit de surveillance de la tension d'un dispositif sélectionné d'alimentation à courant continu dans un système d'alimentation redondant

(30) Priorität: 12.06.1989 DE 3919183
(43) Veröffentlichungstag der Anmeldung: 19.12.1990
(73) Patentinhaber: SIEMENS AKTIENGESELLSCHAFT, 80333 München (DE)
(72) Erfinder: Maeder, Rolf, D-3151 Vöhrum (DE)

(56) Entgegenhaltungen:
- WO-A-87/04874
- DE-A- 3 442 374
- DE-A- 3 444 065
- FR-A- 2 337 457
- GB-A- 2 147 437

## Beschreibung

Die Erfindung geht aus von einer Schaltung nach dem Oberbegriff des Patentanspruches 1.

Aus der DE-OS 26 42 464 ist eine Schaltungsanordnung zur ausfallsicheren Stromversorgung mittels alternativ wirksamer Stromversorgungseinrichtungen bekannt, die über getrennte Versorgungsleitungen mit zu versorgenden Verbrauchern verbunden sind. Die beiden Stromversorgungseinrichtungen sind über gegenpolig geschaltete Dioden im Stromkreis der Verbraucher gegeneinander entkoppelt angeordnet. Ihnen zugeordnete Überwacher sorgen dafür, daß bei Ausfall der normalerweise speisenden Stromversorgungseinrichtung auf das jeweils andere Versorgungsgerät umgeschaltet werden kann. Ferner ist es Aufgabe der gesonderten Überwacher, auch das jeweilige Reserve-Versorgungsgerät laufend auf das Einhalten vorgegebener Spannungswerte auf den Zuleitungen zu den Verbrauchern zu überwachen, um so etwaige Störungen möglichst frühzeitig zu erkennen und die Störungsbeseitigung herbeiführen zu können, bevor im Stromkreis der speisenden Versorgungseinrichtung eine Störung auftritt, die zum Abschalten dieser Stromversorgungseinrichtung führt. Die zum Überwachen der einzelnen Stromversorgungseinrichtungen verwendeten Spannungswächter benötigen bestimmte Zeitspannen, um das Unterschreiten vorgegebener Spannungswerte erkennen zu können. Diese Zeiten variieren in Abhängigkeit von der Größe der Spannungsabsenkung und der Geschwindigkeit, mit der die Spannungsabsenkung erfolgt. Als besonders kritisch sind plötzliche Spannungseinbrüche anzusehen, weil die Eigenkapazität der Spannungswächter in diesen Fällen eine Störungsmeldung in "real-time" verhindert. Ein einwandfreies Überwachen der beiden Stromversorgungsgeräte und der an sie angeschlossenen Leitungsteile ist nur möglich, solange die in die Versorgungskreise geschalteten Entkopplungsdioden einwandfrei arbeiten. Wenn sich die Diodenentkopplung infolge Durchlegierung störungsbedingt aufhebt, werden die Überwachungseinrichtungen der beiden Stromversorgungseinrichtungen gleichgeschaltet und der Ausfall des jeweils überwachten Systems wird dann nicht mehr erfaßt. Während des Umschaltens auf eine Reservestromversorgungseinrichtung kommt es unweigerlich zu einer wenn auch nur kurzen Spannungsabsenkung im Speisekreis der Verbraucher, d. h. die Stromversorgung arbeitet nicht unterbrechungsfrei. Dies jedoch wird dort verlangt, wo Verbraucher auf das Unterschreiten vorgegebener Spannungswerte besonders schnell reagieren, beispielsweise bei Rechnersystemen. Hier ist eine rasche Störungserkennung gefordert, die im Störungsfall die Rechner abschaltet bevor diese fehlerhafte Ausgangssignale abgeben.

Aus der DE-AS 17 65 270 ist ein Verfahren zum unterbrechungsfreien Umschalten eines Verbrauchers von einem Stromversorgungsaggregat auf ein Bereitschaftsnetz oder Ersatzaggregat bekannt, bei der ein gesonderter Energiespeicher während des Umschaltens auf das Ersatzaggregat die Speisung des Verbrauchers aufrechterhält. Der Energiespeicher ist vorgzugsweise als Kondensator ausgebildet. Die unterbrechungsfreie Stromversorgung des Stromverbrauchers ist selbst bei Überdimensionierung des Kondensators nur dann sichergestellt, wenn eine etwaige Spannungsabsenkung rasch genug erkannt und das Bereitschaftsnetz oder Ersatzaggregat schnell genug auf den Verbraucher aufgeschaltet wird. Die zum Überwachen von Stromversorgungseinrichtungen verwendeten handelsüblichen Spannungswächter erfüllen diese Aufgabe wegen ihrer Eigenkapazität mindestens bei dynamischen Spannungsabsenkungen nur ungenügend.

Aufgabe der Erfindung ist es, eine Schaltung nach dem Oberbegriff des Patentanspruches 1 anzugeben, die auf das dynamische Unterschreiten vorgegebener Spannungswerte innerhalb weniger Millisekunden reagiert, eine entsprechende Meldung auslöst und die Umschaltung der Stromversorgungseinrichtungen veranlaßt.

Die Erfindung löst diese Aufgabe durch die kennzeichnenden Merkmale des Patentanspruches 1. Vorteilhafte Ausbildungen der erfindungsgemäßen Schaltung sind in den Unteransprüchen angegeben.

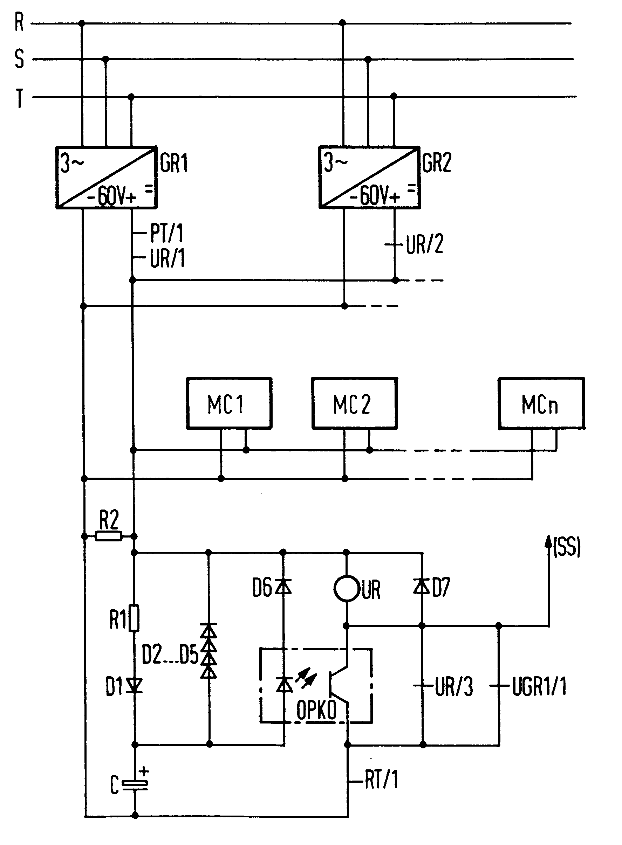

Die Erfindung ist nachstehend anhand eines in der Zeichnung dargestellten Ausführungsbeispieles näher erläutert.

Die Zeichnung zeigt im oberen Teil zwei vorzugsweise gleichartige Gleichstromversorgungseinrichtungen GR1 und GR2, die beide eingangsseitig an ein unterbrechungsfreies dreiphasiges Netz R, S, T angeschlossen sind. Die Gleichstromversorgungseinrichtungen dienen zur Stromversorgung eines aus den Rechnern MC1 bis MCn bestehenden Mehrrechnersystems. Von den beiden Stromversorungseinrichtungen ist die Stromversorgungseinrichtung GR1 wirksam; die Stromversorgungseinrichtung GR2 bildet die Reserveeinheit und ist über den Kontakt UR/2 eines Umschaltrelais von den Verbrauchern abgetrennt. Beide Gleichstromversorgungseinrichtungen beinhalten, in der Zeichnung nicht dargestellt, handelsübliche Spannungswächter, die auf das statische Unterschreiten vorgegebener Spannungsschwellwerte, d. h. auf langsame Spannungsabsenkungen reagieren und entsprechende Überwachungsmeldungen an eine nicht dargestellte Bewertungseinrichtung weitergeben; diese Bewertungseinrichtung kann beispielsweise einer der angeschlossenen Rechner sein. Beim Erkennen einer zu niedrigen Betriebsspannung schalten sich die Rechner selbsttätig ab oder sie werden über einen externen Schalter von der Stromversorgung getrennt.

Zum Überwachen der jeweils wirksamen Gleichstromversorgungseinrichtung auf dynamische Spannungsabsenkungen dient die im unteren Teil der Zeichnung dargestellte Überwachungsschaltung. Diese Überwachungsschaltung beinhaltet einen als Elektrolytkondensator C ausgebildeten Energiespeicher für die Stromversorgung der Überwachungsschaltung und die vorübergehende Speisung der als Verbraucher fungierenden Rechner beim Umschalten von der derzeit speisenden Stromversorgungseinrichtung auf die Reservestromversorgungseinrichtung. Der Energiespeicher C wird über die Reihenschaltung aus einem Ladewiderstand R1 und einer in Laderichtung des Energiespeichers gepolten Diode D1 laufend aus der speisenden Stromversorgungseinrichtung nachgeladen. Der Reihenschaltung aus dem Ladewiderstand R1 und der Diode D1 ist ein aus der Reihenschaltung mehrerer Dioden bestehendes stromrichtungsempfindliches Bauelement D2 bis D5 parallelgeschaltet. Die Durchlaßrichtung dieses stromrichtungsempfindlichen Bauelementes ist entgegengesetzt von der der Diode D1 im Ladekreis des Energiespeichers. Sobald die Spannung der speisenden Gleichstromversorgungseinrichtung auch nur kurzzeitig aber deutlich unter die an den Klemmen des Energiespeichers abgreifbare Spannung absinkt (Spannungseinbruch), wird dem Energiespeicher über das stromrichtyngsempfindliche Bauelement und die Rechner MC1 bis MCn Energie entzogen. Der dabei fließende Strom baut an dem stromrichtungsempfindlichen Bauelement D2 bis D5 einen Spannungsabfall auf, der zum Durchschalten eines als Optokoppler ausgebildeten schnellen elektronischen Schalters OPKO dient. Dieser elektronische Schalter veranlaßt die Ausgabe einer die eingetretene Störung kennzeichnenden Störungsmeldung SS. Um in jenem Falle sicherzustellen, daß dem Energiespeicher beim plötzlichen Absinken der Ausgangsspannung der speisenden Gleichstromversorgungseinrichtung ein zum Ansprechen des elektronischen Schalters ausreichend hoher Entladestrom entnommen wird, kann es vorteilhaft sein, den Rechnern einen Widerstand R2 als Grundlast parallelzuschalten.

Mit dem elektronischen Schalter OPKO in Reihe geschaltet ist die Wicklung eines Umschaltrelais UR, das bei seinem Ansprechen über seinen Kontakt UR/1 die bisher aufgeschaltete Stromversorgungseinrichtung GR1 vom Speisekreis der Verbraucher abtrennt und über seinen Kontakt UR/2 die bisherige Reservestromversorgungseinrichtung GR2 auf die Verbraucher aufschaltet. Das Umschaltrelais UR schaltet sich über seinen Kontakt UR/3 einen Selbsthaltekreis, der dafür sorgt, daß die Umschaltung der Stromversorgungseinrichtungen auch dann bestehen bleibt, wenn der Energiespeicher C wieder mit Ladestrom versorgt wird. Die Speisung des Umschaltrelais erfolgt dann aus der speisenden Stromversorgungseinrichtung GR2. Außerdem sorgt der Kontakt UR/3 des Umschaltrelais dafür, daß die Störungsmeldung SS auch dann bestehen bleibt, wenn der elektronische Schalter OPKO wieder den hochohmigen Schaltzustand einnimmt.

Das stromrichtungsempfindliche Bauelement kann auch aus einem Widerstand und einer Diode oder einer Zener-Diode bestehen. Die Verwendung von in Reihe geschalteten Dioden hat aber den Vorteil, daß hierdurch der Optokoppler vor Überspannungen geschützt wird. Dabei kann die Anordnung so getroffen sein, daß auch beim Durchlegieren einer der Dioden des stromrichtungsempfindlichen Bauelementes noch eine zum Schalten des elektronischen Schalters OPKO ausreichende Spannung an diesem Bauelement abgreifbar ist.

Die mit der Diode des Optokopplers in Reihe geschaltete, in dessen Durchlassrichtung gepolte Diode D6 schützt den Optokoppler vor Gegenspannungen; die der Wicklung des Umschaltrelais UR parallelgeschaltete Diode D7 schützt den Optokoppler vor den Induktionsspitzen des Relais bei dessem Abschalten.

In den Haltekreis des Umschaltrelais UR ist ein bei seiner Betätigung den Haltestromkreis auftrennender Rückstellkontakt RT/1 einer Rückstelltaste geschaltet. Diese Rückstelltaste sorgt bei ihrer Betätigung dafür, daß der Selbsthaltekreis des Umschaltrelais unterbrochen und damit die Störungsmeldung SS unter der Voraussetzung aufgehoben wird, daß die Speisespannung der jeweils zu speisenden Stromversorgungseinrichtung stabil ist und oberhalb eines festgelegten unteren Schwellwertes liegt.

In den Lastkreis der ausgewählten Stromversorgungseinrichtung GR1 ist ein bei seiner Betätigung den Lastkreis auftrennender Kontakt PT/1 einer Prüftaste geschaltet. Beim Betätigen dieser Prüftaste wird die Stromversorgung des Energiespeichers C unterbrochen und die Überwachungsschaltung wird aktiviert. Auf diese Weise läßt sich das ordnungsgerechte Funktionsverhalten der Überwachungsschaltung überprüfen. Die Prüftaste kann dabei von Hand betätigt werden oder aber automatisch, beispielsweise zu vorgegebenen Zeiten. Dies kann beispielsweise im Eisenbahnsicherungswesen beim Umschalten der Stromversorgung von Lichtsignalen von der Tag- auf die Nachtspannung und umgekehrt geschehen.

Dem Selbsthaltekontakt UR/3 des Umschaltrelais ist ein Kontakt UGR1/1 des der ausgewählten Stromversorgungseinrichtung zugeordneten internen Spannungswächters parallelgeschaltet. Über diesen Kontakt des internen Spannungswächters wird bei etwaigen vom internen Spannungswächter festgestellten Störungen ebenfalls eine Störungsmeldung SS an die Bewertungseinrichtung, beispielsweise einen der Rechner ausgegeben.

Zum hochgenauen Einstellen der Schaltschwelle des Optokoppler-Schalttransistors kann es von Vorteil sein, die Basisvorspannung des Schalttransistors einzustellen. Hierfür müssen dann entsprechend beschaltete Optokoppler verwendet werden.

Bei dem vorstehend näher erläuterten Ausführungsbeispiel sind die beiden Stromversorgungseinrichtungen über ihren Minuspol miteinander verbunden und das wechselweise Aufschalten der Stromversorgungseinrichtungen auf die Verbraucher geschieht über in die Zuleitungen zum Pluspol geschaltete Ausschlußkontakte des Umschaltrelais. Die Anordnung kann aber auch so getroffen sein, daß die Stromversorgungseinrichtungen über ihren Pluspol miteinander verbunden sind und daß die Ausschlußkontakte in die Zuleitungen zu ihrem jeweiligen Minuspol geschaltet sind.

Die erfindungsgemäße Schaltung ist nicht nur verwendbar bei Stromversorgungseinrichtungen mit nur einem Reservesystem, sondern auch bei solchen mit mehreren Reservesystemen. Für die zweite, dritte usw. Reservestromversorgungseinrichtung ist dann eine der erfindungsgemäßen Schaltung entsprechende zweite, dritte usw. Schaltung vorzusehen und in die Speisekreise der zweiten, dritten usw. Stromversorgungseinrichtungen sind dann Kontakte der Umschaltrelais dieser zweiten, dritten usw. Überwachungsschaltungen zu schalten.

## Patentansprüche

1. Schaltung zum Überwachen der Spannung einer ausgewählten Gleichstromversorgungseinrichtung in einem aus mehreren derartigen, ausgangsseitig gegeneinander entkoppelten Stromversorgungseinrichtungen (GR1,GR2) bestehenden Stromversorgungssystem auf dynamisches Unterschreiten eines vorgegebenen Spannungswertes der ausgewählten Stromversorgungseinrichtung und zum unterbrechungsfreien Umschalten der Stromversorgung von Verbrauchern (MC1 bis MCn) im Falle unzulässiger Spannungsabsenkungen auf eine andere Stromversorgungseinrichtung, mit einem aus der jeweils wirksamen Stromversorgungseinrichtung gespeisten Energiespeicher (C) zur vorübergehenden Energieversorgung der Verbraucher und der Überwachungsschaltung beim Umschalten auf die andere Stromversorgungseinrichtung, insbesondere zum Überwachen redundanter Stromversorgungseinrichtungen zum Betrieb von Rechnersystemen im Eisenbahnsicherungswesen,
**dadurch gekennzeichnet**,
daß ein stromrichtungsempfindliches Bauelement (D2 bis D5) vorgesehen ist, an dessen Anschlußklemmen bei Energieentnahme aus dem Energiespeicher (C) ein ausreichend hoher Spannungsabfall zum Durchsteuern eines diesem parallelgeschalteten, aus dem Energiespeicher gespeisten elektronischen Schalters (OPKO) auftritt und daß dieser elektronische Schalter bei seiner Betätigung ein Störungssignal (SS) ausgibt und einen elektromechanischen Schalter (UR) einstellt, der die Umschaltung der Stromversorgungseinrichtungen (GR1, GR2) über Ausschlußkontakte (UR/1, UR/2) bewirkt und sich einen aus der anderen Stromversorgungseinrichtung (GR2) gespeisten Selbsthaltekreis schaltet (über UR/3).

2. Schaltung nach Anspruch 1, **dadurch gekennzeichnet**, daß das stromrichtungsempfindliche Bauelement (D2 bis D5) der Reihenschaltung aus einem Ladewiderstand (R1) für den Energiespeicher (C) und einer in Laderichtung des Energiespeichers betriebenen Diode (D1) parallelgeschaltet ist.

3. Schaltung nach Anspruch 1 oder 2, **dadurch gekennzeichnet**, daß das stromrichtungsempfindliche Bauelement (D2 bis D5) durch die Reihenschaltung mehrerer Dioden dargestellt ist.

4. Schaltung nach Anspruch 1, **dadurch gekennzeichnet**, daß den Verbrauchern ein Widerstand (R2) als Grundlast parallelgeschaltet ist.

5. Schaltung nach Anspruch 1, **dadurch gekennzeichnet**, daß der Selbsthaltekontakt (UR/3) des elektromechanischen Schalters (UR) der Schaltstrecke des elektronischen Schalters (OPKO) parallelgeschaltet ist.

6. Schaltung nach Anspruch 1, **dadurch gekennzeichnet**, daß der Energiespeicher (C) als Elektrolytkondensator ausgebildet ist.

7. Schaltung nach Anspruch 1, **dadurch gekennzeichnet**, daß der elektronische Schalter (OPKO) als Optokoppler ausgebildet ist, dessen Leuchtdiode in gleicher Richtung gepolt ist wie das stromrichtungsempfindliche Bauelement (D2 bis D5) und dessen Schalttransistor mit dem elektromechanischen Schalter (UR) in Reihe geschaltet ist.

8. Schaltung nach Anspruch 7 oder 6 und 7, **dadurch gekennzeichnet**, daß der eine Anschluß des OptokopplerSchalttransistors (OPKO) an den einen Pol des Energiespeichers (C) und der andere Anschluß über den elektromechanischen Schalter (UR) und das stromrichtungsempfindliche Bauelement (D2 bis D5) an den anderen Pol des Energiespeichers angeschlossen ist.

9. Schaltung nach Anspruch 7 oder 8, **dadurch gekennzeichnet**, daß die Schaltschwelle des Optokoppler-Schalttransistors durch Basisvorspannung einstellbar ist.

10. Schaltung nach Anspruch 7 oder 8, **dadurch gekennzeichnet**, daß im Stromkreis der Leuchtdiode des Optokopplers (OPKO) eine in deren Durchlaßrichtung betriebene Sperrdiode (D6) angeordnet ist.

11. Schaltung nach Anspruch 1, 7, 8, 9 oder 10, **dadurch gekennzeichnet**, daß der Wicklung des elektromechanischen Schalters (UR) eine Löschdiode (D7) oder ein Löschkondensator parallelgeschaltet ist.

12. Schaltung nach Anspruch 1, **dadurch gekennzeichnet**, daß in den Haltekreis des elektromechanischen Schalters (UR) ein bei seiner Betätigung den Haltestromkreis auftrennender Rückstellkontakt (RT/1) einer Rückstelltaste geschaltet ist.

13. Schaltung nach Anspruch 1, **dadurch gekennzeichnet**, daß in den Lastkreis der ausgewählten Stromversorgungseinrichtung (GR1) ein bei seiner Betätigung den Lastkreis auftrennender Kontakt (PT/1) einer Prüftaste geschaltet ist.

14. Schaltung nach Anspruch 1, **dadurch gekennzeichnet**, daß in den Lastkreis der ausgewählten Stromversorungseinrichtung (GR1) ein bei seiner Beteiligung den Lastkreis öffnender Kontakt eines zu vorgegebenen Zeiten automatisch betätigbaren Schalters geschaltet ist.

15. Schaltung nach Anspruch 1 oder 7, **dadurch gekennzeichnet**, daß dem Selbsthaltekontakt (UR/3) des elektromechanischen Schalters (UR) ein beim unzulässigen statischen Absinken der Versorgungsspannung der ausgewählten Stromversorgungseinrichtung (GR1) oder bei sonstigen detektierten Störungen schließender Kontakt (GR1/1) eines internen Spannungswächters parallelgeschaltet ist.

16. Schaltung nach Anspruch 1, **dadurch gekennzeichnet**, daß die Stromversorgungseinrichtungen (GR1, GR2) einpolig miteinander verbunden sind und daß in die Zuleitungen zu dem jeweils anderen Pol (+) Ausschlußkontakte (UR/1, UR/2) des elektromechanischen Schalters (UR) geschaltet sind.

## Claims

1. Circuit for monitoring the voltage of a selected DC supply device in a power-supply system, which comprises a plurality of such power-supply devices (GR1, GR2) which are decoupled from one another on the output side, for transiently falling below a predetermined voltage value of the selected power-supply device and for interruption-free changing over of the power supply from loads (MC1 to MCn) to a different power-supply device in the event of unacceptable voltage reductions, having an energy store (C), which is supplied from the respectively effective power-supply device, for temporarily supplying energy to the loads and to the monitoring circuit while changing over to the other power-supply device, preferably for monitoring redundant power-supply devices for operating computer systems in railway protection systems, characterized in that a component (D2 to D5) is provided which is sensitive to current direction and on whose connecting terminals there occurs, when energy is taken from the energy store (C), a voltage drop which is sufficiently high to switch through an electronic switch (OPKO) which is connected in parallel thereto and is supplied from the energy store, and in that this electronic switch emits a disturbance signal (SS) when it is operated and operates an electromechanical switch (UR) which causes the power-supply devices (GR1, GR2) to change over via connection contacts (UR/1, UR/2) and switches (via UR/3) a self-latching circuit which is supplied from the other power-supply device (GR2).

2. Circuit according to Claim 1, characterized in that the component (D2 to D5) which is sensitive to current direction is connected in parallel with the series circuit comprising a load resistor (R1) for the energy store (C) and a diode (D1) which operates in the charging direction of the energy store.

3. Circuit according to Claim 1 or 2, characterized in that the component (D2 to D5) which is sensitive to current direction is represented by a plurality of diodes connected in series.

4. Circuit according to Claim 1, characterized in that a resistor (R2) is connected in parallel with the loads, as the basic load.

5. Circuit according to Claim 1, characterized in that the self-latching content (UR/3) of the electromechanical switch (UR) is connected in parallel with the switching path of the electronic switch (OPKO).

6. Circuit according to Claim 1, characterized in that the energy store (C) is configured as an electrolytic capacitor.

7. Circuit according to Claim 1, characterized in that the electronic switch (OPKO) is configured as an optocoupler whose light-emitting diode is polarized in the same direction as the component (D2 to D5) which is sensitive to current direction, and whose switching transistor is connected in series with the electromechanical switch (UR).

8. Circuit according to Claim 7 or 6 and 7, characterized in that one connection of the optocoupler switching transistor (OPKO) is connected to one pole of the energy store (C) and the other connection is connected to the other pole of the energy store, via the electromechanical switch (UR) and the component (D2 to D5) which is sensitive to current direction.

9. Circuit according to Claim 7 or 8, characterized in that the switching threshold of the optocoupler switching transistor is adjustable by means of the base bias voltage.

10. Circuit according to Claim 7 or 8, characterized in that a blocking diode (D6), which is operated in its forward direction, is arranged in the circuit of the light-emitting diode of the optocoupler (OPKO).

11. Circuit according to Claim 1, 7, 8, 9 or 10, characterized in that a surge diode (D7) or a surge-absorbing capacitor is connected in parallel with the winding of the electromechanical switch (UR).

12. Circuit according to Claim 1, characterized in that a resetting contact (RT/1), which breaks the latching circuit when it is operated, of a resetting key is connected in the latching circuit of the electromechanical switch (UR).

13. Circuit according to Claim 1, characterized in that a contact (PT/1), which breaks the load circuit when it is operated, of a test key is connected in the load circuit of the selected power-supply device (GR1).

14. Circuit according to Claim 1, characterized in that a contact, which opens the load circuit when it is operated, of a switch, which can be operated automatically at predetermined times, is connected in the load circuit of the selected power-supply device (GR1).

15. Circuit according to Claim 1 or 7, characterized in that a contact (GR1/1), which closes in the event of unacceptable steady-state reduction of the supply voltage of the selected power-supply device (GR1) or in the event of any other detected disturbances, of an internal voltage monitor is connected in parallel with the self-latching contact (UR/3) of the electromechanical switch (UR).

16. Circuit according to Claim 1, characterized in that the power-supply devices (GR1, GR2) are connected to one another by means of one pole, and in that connecting contacts (UK/1, UR/2) of the electromechanical switch (UR) are connected in the supply leads to the respective other pole (+).

## Revendications

1. Circuit de contrôle de la tension d'un dispositif sélectionné d'alimentation en courant continu, dans un système d'alimentation en courant constitué de plusieurs dispositifs d'alimentation en courant (GR1, GR2) de ce genre et découplés, côté sortie, les uns par rapport aux autres, en ce qui concerne des dépassements dynamiques d'une valeur de tension prédéterminée du dispositif sélectionné d'alimentation en courant, et pour la commutation sans interruption de l'alimentation en courant d'une unité d'utilisation (MC1 à MCn), dans le cas de chutes de tension inadmissibles, sur un autre dispositif d'alimentation en courant, circuit comportant un accumulateur d'énergie (C), alimenté à partir du dispositif actif d'alimentation en courant, pour une alimentation en énergie préalable de l'unité consommatrice ou charge et du circuit de contrôle lors de la commutation sur l'autre dispositif d'alimentation en courant, notamment pour le contrôle de dispositifs d'alimentation en courant redondants, pour le fonctionnement de systèmes d'ordinateurs, dans des services de sécurité des chemins de fer,
caractérisé en ce qu'il est prévu un module (D2 à D5) qui est sensible au sens du courant et aux bornes de raccordement duquel apparaît, lorsque de l'énergie est prélevée à partir de l'accumulateur d'énergie (C), une chute de tension importante suffisante pour la commande à l'état passant d'un commutateur électronique (OPKO) monté en parallèle avec le module et alimenté à partir de l'accumulateur d'énergie, et que ce commutateur électronique fournit, lors de sa commande, un signal de perturbation (SS) et met en service un commutateur électromécanique (UR), qui provoque la commutation des dispositifs d'alimentation en courant (GR1, GR2), par l'intermédiaire de contacts de débranchement (UR/1, UR/2), et qui se branche (par l'intermédiaire de UR/3) à un circuit d'arrêt automatique alimenté à partir de l'autre dispositif d'alimentation en courant (GR2).

2. Circuit suivant la revendication 1, caractérisé en ce que le module (D2 à D5) sensible au sens du courant est branché en parallèle à un circuit série constitué d'une résistance de charge (R1) pour l'accumulateur d'énergie (C) et d'une diode (D1) montée pour fonctionner dans le sens de la charge de l'accumulateur d'énergie.

3. Circuit suivant la revendication 1 ou 2, caractérisé en ce que le module (D2 à D5) sensible au sens du courant est représenté par le circuit série de plusieurs diodes.

4. Circuit suivant la revendication 1, caractérisé en ce qu'une résistance (R2) est branchée, en tant que charge de base, en parallèle aux unités consommatrices.

5. Circuit suivant la revendication 1, caractérisé en ce que le contact d'arrêt automatique (UR/3) du commutateur électromécanique (UR) est branché en parallèle à la section de commutation du commutateur électronique (OPKO).

6. Circuit suivant la revendication 1, caractérisé en ce que l'accumulateur d'énergie (C) est réalisé en tant que condensateur électrolytique.

7. Circuit suivant la revendication 1, caractérisé en ce que le commutateur électronique (OPKO) est réalisé en tant qu'optocoupleur, dont la diode électroluminescente est polarisée dans le même sens que le module (D2 à D5) sensible au sens du courant, et dont le transistor de commutation est branché en série au commutateur électromécanique (UR).

8. Circuit suivant la revendication 7 ou 6 et 7, caractérisé en ce que l'une des bornes du transistor de commutation de l'optocoupleur (OPKO) est reliée à l'un des pôles de l'accumulateur d'énergie (C) et l'autre des bornes est reliée à l'autre pôle de l'accumulateur d'énergie, par l'intermédiaire du commutateur électromécanique (UR) et du module (D2 à D5) sensible au sens du courant.

9. Circuit suivant la revendication 7 ou 8, caractérisé en ce que la valeur de seuil de commutation du transistor de commutation de l'optocoupleur est susceptible d'être réglée par la tension de polarisation de la base.

10. Circuit suivant la revendication 7 ou 8, caractérisé en ce qu'une diode de blocage (D6) fonctionnant en direct est montée dans le circuit de courant de la diode électroluminescente de l'optocoupleur (OPKO).

11. Circuit suivant la revendication 1, 7, 8, 9 ou 10, caractérisé en ce qu'en parallèle avec l'enroulement du commutateur électromécanique (UR) est branchée une diode d'amortissement (D7) ou un condensateur d'amortissement.

12. Circuit suivant la revendication 1, caractérisé en ce qu'un contact de rappel (RT/1) d'une touche de rappel, qui ouvre le circuit de courant d'arrêt lors de sa commande, est branché dans le circuit d'arrêt du commutateur électromécanique (UR).

13. Circuit suivant la revendication 1, caractérisé en ce qu'un contact (PT/1) d'une touche de contrôle, qui ouvre le circuit de charge lors de sa commande, est branché dans le circuit de charge du dispositif sélectionné d'alimentation en courant (GR1).

14. Circuit suivant la revendication 1, caractérisé en ce qu'un contact, qui, lors de sa participation, ouvre le circuit de charge d'un commutateur qui peut être actionné automatiquement à des instants prédéterminés, est monté dans le circuit de charge du dispositif sélectionné d'alimentation en courant (GR1).

15. Circuit suivant la revendication 1 ou 7, caractérisé en ce que parallèlement au contact d'arrêt automatique (UR/3) du commutateur électromécanique (UR), est branché un contact (GR1/1) d'un relais de protection interne, contact qui est fermé pour des diminutions statiques inadmissibles de la tension d'alimentation du dispositif sélectionné d'alimentation en courant (GR1) ou pour des perturbations particulières détectées.

16. Circuit suivant la revendication 1, caractérisé en ce que les dispositifs d'alimentation en courant (GR1, GR2) sont reliés entre eux de manière unipolaire, et que des contacts de débranchement (UR/1, UR/2) du commutateur électromécanique (UR) sont branchés dans les conducteurs menant à l'autre pôle (+).
